# EUROPÄISCHE PATENTSCHRIFT

(11) **EP 3 083 734 B1**
(45) Veröffentlichungstag und Bekanntmachung des Hinweises auf die Patenterteilung: **26.02.2020**
(21) Anmeldenummer: 14805934.8
(22) Anmeldetag: 03.12.2014
(51) Int. Cl.: C08G 18/48, C08G 18/66, C08G 18/75, C08G 18/76, C08G 18/32, C08L 75/06, H01B 3/30, H01B 7/295, H01B 13/24, H01B 3/10, H01B 3/00, C08K 5/5333, C08K 3/22

(54) **FLAMMGESCHÜTZTES THERMOPLASTISCHES POLYURETHAN**
FLAME RETARDANT THERMOPLASTIC POLYURETHANE
POLYURÉTHANE THERMOPLASTIQUE IGNIFUGE

(30) Priorität: 20.12.2013 EP 13199092
(43) Veröffentlichungstag der Anmeldung: 26.10.2016
(73) Patentinhaber: BASF SE, 67056 Ludwigshafen am Rhein (DE)
(72) Erfinder: HENZE, Oliver Steffen, 49448 Lemförde (DE); MÜHREN, Oliver, 49565 Bramsche (DE); RUDOLPH, Hans, 49152 Bad Essen Harpenfeld (DE); ROSENBOHM, Dirk, 32369 Rahden (DE)
(86) Internationale Anmeldenummer: PCT/EP2014/076338
(87) Internationale Veröffentlichungsnummer: WO 2015/090953

(56) Entgegenhaltungen:
- WO-A1-2011/150567
- DE-A1- 10 343 121
- US-A1- 2013 245 169

## Beschreibung

Die vorliegende Erfindung betrifft Zusammensetzungen enthaltend mindestens ein thermoplastisches Polyurethan TPU-1, das auf einem aliphatischen Diisocyanat basiert, mindestens ein Metallhydroxid und mindestens ein phosphorhaltiges Flammschutzmittel, insbesondere solche Zusammensetzungen, die weiter mindestens ein thermoplastisches Polyurethan TPU-2, das auf einem aromatischen Diisocyanat basiert, enthalten. Weiter betrifft die vorliegende Erfindung die Verwendung derartiger Zusammensetzungen zur Herstellung von Kabelummantelungen.

Aus PVC hergestellte Kabel haben den Nachteil, dass sie beim Verbrennen toxische Gase entwickeln. Daher werden Produkte auf Basis von thermoplastischen Polyurethanen entwickelt, die geringere Rauchgasdichten und Rauchgastoxizitäten aufweisen und guten mechanische Eigenschaften, Abriebfestigkeit sowie Flexibilität aufweisen. Wegen des nicht ausreichenden Flammverhaltens werden Zusammensetzungen auf Basis von thermoplastischen Polyurethanen entwickelt, die verschiedene Flammschutzmittel enthalten.

Dabei können den thermoplastischen Polyurethanen (TPU) sowohl halogenhaltige als auch halogenfreie Flammschutzmittel beigemischt werden. Die halogenfrei flammgeschützten thermoplastischen Polyurethane haben dabei in der Regel den Vorteil, dass sie beim Abbrennen weniger toxische und weniger korrosive Rauchgase entwickeln. Halogenfreie flammgeschützten TPU sind beispielsweise beschrieben in EP 0 617 079 A2, WO 2006/121549 A1 oder WO 03/066723 A2.

Zum halogenfreien Flammschutz von thermoplastischen Polyurethanen können auch Metallhydroxide allein oder in Kombination mit phosphorhaltigen Flammschutzmitteln und/oder Schichtsilikaten eingesetzt werden.

EP 1 167 429 A1 betrifft flammgeschützte thermoplastische Polyurethane für Kabelmäntel. Die Zusammensetzungen enthalten ein Polyurethan, bevorzugt ein Polyether basiertes Polyurethan, Aluminium- oder Magnesium-Hydroxid und Phosphorsäureester. Auch US 2013/0059955 A1 offenbart halogenfreie TPU-Zusammensetzungen mit Flammschutzmitteln auf Phosphatbasis.

DE 103 43 121 A1 offenbart flammgeschützte thermoplastische Polyurethane, die ein Metallhydroxid enthalten, insbesondere Aluminium- und/oder Magnesium-Hydroxid. Die thermoplastischen Polyurethane sind durch ihr Molekulargewicht charakterisiert. Die Zusammensetzungen können weiter Phosphate oder Phosphonate enthalten. Bezüglich der Ausgangsstoffe für die Synthese der thermoplastischen Polyurethane werden als gegenüber Isocyanaten reaktive Verbindungen neben Polyesterolen und Polyetherolen auch Polycarbonatdiole offenbart, wobei Polyetherpolyole bevorzugt sind. Es werden keine Beispiele für Polycarbonatdiole genannt. Gemäß DE 103 43 121 A1 können statt eines Polyols auch Mischungen verschiedener Polyole eingesetzt werden. Darüber hinaus werden hohe Füllgrade offenbart, d.h. hohe Anteile an Metallhydroxiden und weiteren festen Komponenten im thermoplastischen Polyurethan, die zur Verschlechterung der mechanischen Eigenschaften führen.

Um der durch den wegen der für den Flammtest erforderlichen hohen Füllgrade häufig auftreten Schwierigkeiten entgegenzuwirken und die erforderlichen mechanischen Eigenschaften, Rauchgasdichten und Rauchgastoxizitäten zu erreichen, werden häufig weitere Zusatzstoffe zugesetzt.

So offenbart WO2011/072458 A1 flexible, halogenfrei, flammhemmende Zusammensetzungen, die neben einem thermoplastischen Polyurethan noch etwa 5 Gew.-% bis etwa 50 Gew.-% eines Olefin-Blockcopolymers (OBC) und von etwa 30 Gew.-% bis etwa 70 Gew.-% eines Flammschutzmittels enthalten. Dabei kann es sich um ein- oder zweiphasige Systeme handeln.

US 2013/0081853 A1 betrifft Zusammensetzungen, vorzugsweise halogenfreie, flammhemmende Zusammensetzungen, umfassend ein TPU-Polymer und ein Polyolefin sowie Flammschutzmittel auf Phosphor-Basis und weitere Zusatzstoffe. Die Zusammensetzungen weisen ausweislich der US 2013/0081853 A1 gute mechanische Eigenschaften auf.

US 2013/245169 A1 offenbart ein thermoplastisches Polyurethan basierend auf einem Diisocyanat und einer isocyanatreaktive Verbindung, und ein Flammschutzmittel, wobei das Flammschutzmittel ein Metallhydroxid und eine phosphorhaltige Verbindung umfasst. Dabei kann das eingesetzte Diisocyanat ein aliphatisches Diisocyanat sein.

WO 2011/150567 A1 offenbart eine Zusammensetzung enthaltend ein thermoplastisches Polyurethan, ein Metallhydroxid und ein phosphorhaltiges Flammschutzmittel, wobei das thermoplastische Polyurethan auf einem aliphatischen Diisocyanat basieren kann. Auch die Verwendung der Zusammensetzungen zur Herstellung von Kabelummantelungen wird offenbart..

US 4,381,364 offenbart thermoplastische Zusammensetzungen, die Gemische eines thermoplastischen Polyurethans mit einem Polyvinylhalogenid-Harz und einem Dien-Nitril-Copolymer-Kautschuk enthalten. Die Verwendung als Kabelummantelung wird ebenfalls offenbart.

Auch US2012/0202061 A1 offenbart Flammschutzmittel-Zusammensetzungen, die ein thermoplastisches Polyurethan, ein Metallhydrat und auf Phosphor basierende Flammschutzmittel enthalten. Die Zusammensetzungen zeichnen sich durch gute Flammschutzeigenschaften sowie hohen Isolationswiderstand aus.

Die aus dem Stand der Technik bekannten Zusammensetzungen zeigen jedoch entweder keine ausreichenden mechanischen Eigenschaften oder weisen nur unzulängliche Flammeigenschaften, wie beispielsweise Rauchgasdichten auf.

Ausgehend vom Stand der Technik lag der vorliegenden Erfindung demgemäß die Aufgabe zugrunde, flammgeschützte thermoplastische Polyurethane bereitzustellen, die gute mechanische Eigenschaften aufweisen, gute Flammschutzeigenschaften zeigen, und die gleichzeitig eine gute mechanische und chemische Beständigkeit aufweisen.

Erfindungsgemäß wird diese Aufgabe gelöst durch eine Zusammensetzung enthaltend mindestens ein thermoplastisches Polyurethan TPU-1, das auf einem aliphatischen Diisocyanat basiert, mindestens ein Metallhydroxid und mindestens ein phosphorhaltiges Flammschutzmittel, wobei die Zusammensetzung weiter mindestens ein thermoplastisches Polyurethan TPU-2, das auf einem aromatischen Diisocyanat basiert, enthält.

Die erfindungsgemäßen Zusammensetzungen enthalten mindestens ein thermoplastisches Polyurethan, das auf einem aliphatischen Diisocyanat basiert, mindestens ein Metallhydroxid und mindestens ein phosphorhaltiges Flammschutzmittel. Es wurde überraschend gefunden, dass die erfindungsgemäßen Zusammensetzungen gegenüber den aus dem Stand der Technik bekannten Zusammensetzungen verbesserte Eigenschaften aufweisen. Insbesondere weisen die erfindungsgemäßen Zusammensetzungen gute Eigenschaften in Bezug auf die Rauchgasdichten auf sowie gute mechanische Eigenschaften. Ein Maß für die mechanischen Eigenschaften ist beispielsweise die Zugfestigkeit oder die Bruchdehnung der aus den erfindungsgemäßen Zusammensetzungen hergestellten Formkörper vor Alterung. Die Zugfestigkeit wird bestimmt gemäß DIN 53504.

Weiter enthalten die erfindungsgemäßen Zusammensetzungen neben dem TPU-1 noch ein weiteres TPU-2, wobei TPU-2 auf einem aromatischen Diisocyanat basiert. Bevorzugt enthält die erfindungsgemäße Zusammensetzung das TPU-2 in einer Menge im Bereich von 0,1 bis 65 %, bezogen auf die gesamte Zusammensetzung.

Daher betrifft die vorliegende Erfindung eine Zusammensetzung wie zuvor beschrieben, wobei die Zusammensetzung weiter mindestens ein thermoplastisches Polyurethan TPU-2, das auf einem aromatischen Diisocyanat basiert, enthält. Gemäß einer weiteren Ausführungsform betrifft die vorliegende Erfindung daher eine Zusammensetzung wie zuvor beschrieben, wobei der Anteil des thermoplastischen Polyurethans TPU-2 in der Zusammensetzung im Bereich von 0,1 bis 65 % bezogen auf die gesamte Zusammensetzung, liegt.

Die Menge des TPU-1 in der erfindungsgemäßen Zusammensetzung und auch die Menge des TPU-2 kann erfindungsgemäß in weiten Bereichen variieren. Beispielsweise liegt der Anteil des TPU-1 in der erfindungsgemäßen Zusammensetzung im Bereich von 5 bis 35 % bezogen auf die gesamte Zusammensetzung. Der Anteil des TPU-2 in der erfindungsgemäßen Zusammensetzung im Bereich von 15 bis 65 % bezogen auf die gesamte Zusammensetzung.

Die erfindungsgemäße Zusammensetzung enthält das mindestens eine thermoplastische Polyurethan TPU-1 vorzugsweise in einer Menge im Bereich von 15 Gew.-% bis 35 Gew.-%, bezogen auf die gesamte Zusammensetzung, bevorzugt im Bereich von 10 Gew.-% bis 25 Gew.-%, weiter bevorzugt im Bereich von 12 Gew.-% bis 20 Gew.-% und besonders bevorzugt im Bereich von 14 Gew.-% bis 18 Gew.-%, jeweils bezogen auf die gesamte Zusammensetzung.

Die erfindungsgemäße Zusammensetzung enthält das mindestens eine thermoplastische Polyurethan TPU-2 vorzugsweise in einer Menge im Bereich von 15 Gew.-% bis 65 Gew.-%, bezogen auf die gesamte Zusammensetzung, bevorzugt im Bereich von 18 Gew.-% bis 55 Gew.-%, weiter bevorzugt im Bereich von 20 Gew.-% bis 45 Gew.-% und besonders bevorzugt im Bereich von 25 Gew.-% bis 35 Gew.-%, jeweils bezogen auf die gesamte Zusammensetzung.

Gemäß einer weiteren Ausführungsform betrifft die vorliegende Erfindung daher eine Zusammensetzung wie zuvor beschrieben, wobei der Anteil des thermoplastischen Polyurethans TPU-1 in der Zusammensetzung im Bereich von 5 bis 35 % bezogen auf die gesamte Zusammensetzung, liegt.

Gemäß einer weiteren Ausführungsform betrifft die vorliegende Erfindung daher eine Zusammensetzung wie zuvor beschrieben, wobei der Anteil des thermoplastischen Polyurethans TPU-2 in der Zusammensetzung im Bereich von 15 bis 65 % bezogen auf die gesamte Zusammensetzung, liegt.

Neben dem mindestens einen thermoplastisches Polyurethan TPU-1, mindestens einen Metallhydroxid und mindestens einen phosphorhaltiges Flammschutzmittel kann die erfindungsgemäße Zusammensetzung weitere Zusatzstoffe enthalten.

### Thermoplastische Polyurethane

Thermoplastische Polyurethane sind grundsätzlich bekannt. Die Herstellung erfolgt üblicher Weise durch Umsetzung der Komponenten (a) Isocyanaten und (b) gegenüber Isocyanaten reaktiven Verbindungen und gegebenenfalls (c) Kettenverlängerungsmittel gegebenenfalls in Gegenwart von mindestens einem (d) Katalysator und/oder (e) üblichen Hilfsstoffen und/oder Zusatzstoffen. Die Komponenten (a) Isocyanat, (b) gegenüber Isocyanaten reaktive Verbindungen, (c) Kettenverlängerungsmittel werden einzeln oder zusammen auch als Aufbaukomponenten angesprochen.

Die erfindungsgemäßen Zusammensetzungen enthalten mindestens ein thermoplastisches Polyurethan TPU-1, das auf einem aliphatischen Diisocyanat basiert. Weiter enthalten die erfindungsgemäßen Zusammensetzungen mindestens ein thermoplastisches Polyurethan TPU-2, das auf einem aromatischen Diisocyanat basiert. Demgemäß wird zur Herstellung des TPU-1 als Komponente (a) ein aliphatisches Isocyanat, zur Herstellung von TPU-2 ein aromatisches Isocyanat eingesetzt.

Es hat sich gezeigt, dass insbesondere durch den hohen Anteil von TPU-1 in den erfindungsgemäßen Zusammensetzungen geringe Rauchgasdichten erreicht werden können. Für die erfindungsgemäßen Zusammensetzungen, die neben dem TPU-1 noch das TPU-2 enthalten, sind neben den Rauchgasdichten und Flammeigenschaften auch die mechanischen Eigenschaften weiteroptimiert.

Als organische Isocyanate (a) für die Herstellung des TPU-1 werden bevorzugt aliphatische oder cycloaliphatische Isocyanate eingesetzt, weiter bevorzugt Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat,

Gemäß einer weiteren Ausführungsform betrifft die vorliegende Erfindung daher eine Zusammensetzung wie zuvor beschrieben, wobei das thermoplastische Polyurethan TPU-1 auf mindestens einem aliphatischen Diisocyanat ausgewählt aus der Gruppe bestehend aus Hexamethylendiisocyanat und Di(isocyanatocyclohexyl)methan basiert.

Als organische Isocyanate (a) für die Herstellung des TPU-2 werden bevorzugt araliphatische und/oder aromatische Isocyanate eingesetzt, weiter bevorzugt 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Besonders bevorzugt wird 4,4'-MDI eingesetzt.

Gemäß einer weiteren Ausführungsform betrifft die vorliegende Erfindung daher eine Zusammensetzung wie zuvor beschrieben, wobei das thermoplastische Polyurethan TPU-2 auf Diphenylmethandiisocyanat (MDI) basiert.

Erfindungsgemäß können als gegenüber Isocyanaten reaktive Verbindungen (b) grundsätzlich alle dem Fachmann bekannten geeigneten Verbindungen mit gegenüber Isocyanaten reaktiven funktionellen Gruppen eingesetzt werden. Als gegenüber Isocyanaten reaktive Verbindungen (b) wird bevorzugt für TPU-1 und TPU-2 ein Polycarbonatdiol oder ein Polytetrahydrofuranpolyol eingesetzt. Geeignete Polytetrahydrofuranpolyole weisen beispielsweise ein Molekulargewicht im Bereich von 500 bis 5000, bevorzugt 500 bis 2000, besonders bevorzugt 800 bis 1200 auf.

Erfindungsgemäß wird bevorzugt mindestens ein Polycarbonatdiol eingesetzt, bevorzugt ein aliphatisches Polycarbonatdiol. Geeignete Polycarbonatdiole sind beispielsweise Polycarbonatdiole, die auf Alkandiolen basieren. Geeignete Polycarbonatdiole sind streng difunktionelle OH-funktionelle Polycarbonatdiole, bevorzugt streng difunktionelle OH-funktionelle aliphatische Polycarbonatdiole. Geeignete Polycarbonatdiole basieren beispielsweise auf Butandiol, Pentandiol oder Hexandiol, insbesondere 1,4-Butandiol, 1,5-Pentandiol, 1,6-Hexandiol, 3-Methylpentan-(1,5)-diol oder Mischungen davon, besonders bevorzugt 1,4-Butandiol, 1,5-Pentandiol, 1,6-Hexandiol oder Mischungen davon. Bevorzugt werden im Rahmen der vorliegenden Erfindung Polycarbonatdiole basierend auf Butandiol und Hexandiol, Polycarbonatdiole basierend auf Pentandiol und Hexandiol, Polycarbonatdiole basierend auf Hexandiol, und Mischungen aus zwei oder mehr dieser Polycarbonatdiole eingesetzt.

Vorzugsweise weisen die eingesetzten Polycarbonatdiole ein zahlenmittleres Molekulargewicht Mn im Bereich von 500 bis 4000, bestimmt über GPC, bevorzugt im Bereich von 650 bis 3500, bestimmt über GPC, besonders bevorzugt im Bereich von 800 bis 3000, bestimmt über GPC auf.

Die vorliegende Erfindung betrifft gemäß einer weiteren bevorzugten Ausführungsform auch eine Zusammensetzung wie zuvor beschrieben, wobei das mindestens eine Polycarbonatdiol ausgewählt ist aus der Gruppe bestehend aus Polycarbonatdiolen basierend auf Butandiol und Hexandiol, Polycarbonatdiolen basierend auf Pentandiol und Hexandiol, Polycarbonatdiolen basierend auf Hexandiol, und Mischungen aus zwei oder mehr dieser Polycarbonatdiole und wobei das Polycarbonatdiol ein zahlenmittleres Molekulargewicht Mn im Bereich von 500 bis 4000, bestimmt über GPC, aufweist.

Weiter bevorzugt sind Copolycarbonatdiole basierend auf den Diolen 1,5-Pentandiol und 1,6-Hexandiol, bevorzugt mit einem Molekulargewicht Mₙ von ca. 2000 g/mol.

Als Kettenverlängerungsmittel (c) können bevorzugt aliphatische, araliphatische, aromatische und/oder cycloaliphatische Verbindungen mit einem Molekulargewicht von 0,05 kg/mol bis 0,499 kg/mol, bevorzugt 2-funktionelle Verbindungen, eingesetzt werden, beispielsweise Diamine und/oder Alkandiole mit 2 bis 10 C-Atomen im Alkylenrest, Di-, Tri-, Tetra-, Penta-, Hexa-, Hepta-, Okta-, Nona- und/oder Dekaalkylenglykole mit 3 bis 8 Kohlenstoffatomen insbesondere 1,2-Ethylenglykol, 1,3-Propandiol, 1,4-Butandiol, 1,6-Hexandiol, bevorzugt entsprechende Oligo- und/oder Polypropylenglykole, wobei auch Mischungen der Kettenverlängerer eingesetzt werden können. Bevorzugt haben die Verbindungen (c) nur primäre Hydroxylgruppen, ganz besonders bevorzugt ist 1,4-Butandiol.

Katalysatoren (d) welche insbesondere die Reaktion zwischen den NCO-Gruppen der Diisocyanate (a) und den Hydroxylgruppen der gegenüber Isocyanaten reaktiven Verbindung (b) und dem Kettenverlängerungsmittel (c) beschleunigen, sind in einer bevorzugten Ausführungsform tertiären Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, in einer anderen bevorzugten Ausführungsform sind dies organische Metallverbindungen wie Titansäureester, Eisenverbindungen, bevorzugt Eisen-(III)- acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat oder Bismutsalzen in denen Bismut bevorzugt in den Oxidationsstufen 2 oder 3 vorliegt, insbesondere 3. Bevorzugt sind Salze von Carbonsäuren. Als Carbonsäuren werden bevorzugt Carbonsäuren mit 6 bis 14 Kohlenstoffatomen, besonders bevorzugt mit 8 bis 12 Kohlenstoffatomen verwendet. Beispiele für geeignete Bismutsalze sind Bismut(III)-neodecanoat, Bismut-2-ethylhexanoat und Bismut-octanoat.
Die Katalysatoren (d) werden bevorzugt in Mengen von 0,0001 bis 0,1 Gew.-Teilen pro 100 Gew.-Teile der mit Isocyanaten reaktiven Verbindung (b) eingesetzt. Bevorzugt werden Zinnkataylsatoren eingesetzt, insbesondere Zinndioktoat.

Neben Katalysatoren (d) können den Aufbaukomponenten (a) bis (c) auch übliche Hilfsstoffe (e) hinzugefügt werden. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Geeignete Herstellungsverfahren für thermoplastische Polyurethane werden beispielsweise offenbart in EP 0922552 A1, DE 10103424 A1 oder WO 2006/072461 A1. Die Herstellung erfolgt üblicherweise auf einer Bandanlage oder einem Reaktionsextruder, kann aber auch im Labormaßstab, beispielsweise im Handgussverfahren, erfolgen. In Abhängigkeit der stofflichen Eigenschaften der Komponenten werden diese alle unmittelbar miteinander vermischt oder es werden einzelne Komponenten vorvermischt und/oder vorreagiert, z.B. zu Präpolymeren, und dann erst zur Polyaddition gebracht. In einer weiteren Ausführungsform wird zunächst ein thermoplastisches Polyurethan aus den Aufbaukomponenten, ggf. mit Katalysator hergestellt, in das ggf. noch Hilfsstoffe eingearbeitet sein können. In dieses Material wird dann wenigstens ein Flammschutzmittel eingebracht und homogen verteilt. Das homogene Verteilen erfolgt vorzugsweise in einem Extruder, bevorzugt in einem Zweiwellenextruder. Zur Einstellung von Härte von TPU-1 oder TPU-2 können die eingesetzten Mengen der Aufbaukomponenten (b) und (c) in relativ breiten molaren Verhältnissen variiert werden, wobei die Härte üblicherweise mit zunehmendem Gehalt an Kettenverlängerungsmittel (c) ansteigt.

Zur Herstellung von thermoplastischen Polyurethanen, z.B. solchen mit einer Härte Shore A von kleiner als 95, vorzugsweise von 95 bis 80 Shore A, besonders bevorzugt etwa 85 A, können beispielsweise die im wesentlichen difunktionellen Polyhydroxylverbindungen (b) und Kettenverlängerer (c) vorteilhafterweise in Molverhältnissen von 1:1 bis 1:5, vorzugsweise 1:1,5 bis 1:4,5 verwendet werden, so dass die resultierenden Mischungen aus den Aufbaukomponenten (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 bis 75 Shore D, die Molverhältnisse von (b):(c) im Bereich von 1:5,5 bis 1:15, vorzugsweise von 1:6 bis 1:12, liegen, so dass die erhaltenen Mischungen aus (b) und (c) ein Hydroxyläquivalentgewicht von 110 bis 200, vorzugsweise von 120 bis 180, aufweisen.

Erfindungsgemäß weist das TPU-1 vorzugsweise eine Härte im Bereich von 85A bis 65D, bestimmt gemäß DIN ISO 7619-1 auf, weiter bevorzugt im Bereich von 90A bis 60D, bestimmt gemäß DIN ISO 7619-1.

Erfindungsgemäß weist das TPU-2 vorzugsweise eine Härte im Bereich von 80A bis 95A, bestimmt gemäß DIN ISO 7619-1 auf, weiter bevorzugt im Bereich von 85A bis 90A, bestimmt gemäß DIN ISO 7619-1.

Gemäß einer weiteren Ausführungsform betrifft die vorliegende Erfindung daher eine Zusammensetzung wie zuvor beschrieben, wobei das thermoplastische Polyurethan TPU-1 eine Shore Härte im Bereich von 85A bis 65D, bestimmt gemäße DIN ISO 7619-1, aufweist. Gemäß einer weiteren Ausführungsform betrifft die vorliegende Erfindung daher eine Zusammensetzung wie zuvor beschrieben, wobei das thermoplastische Polyurethan TPU-2 eine Shore Härte im Bereich von 80A bis 95A, bestimmt gemäße DIN ISO 7619-1, aufweist.

Zur Herstellung der erfindungsgemäßen thermoplastischen Polyurethane werden die Aufbaukomponenten (a), (b) und (c) bevorzugt in Gegenwart von Katalysatoren (d) und gegebenenfalls Hilfsmitteln und/ oder Zusatzstoffen (e) in solchen Mengen zur Reaktion gebracht, dass das Äquivalenzverhältnis von NCO-Gruppen der Diisocyanate (a) zur Summe der Hydroxylgruppen der Aufbaukomponenten (b) und (c) 0,9 bis 1,1 : 1, vorzugsweise 0,95 bis 1,05 : 1 und insbesondere ungefähr 0,96 bis 1,0 : 1 beträgt.

Vorzugsweise weist das TPU-1 ein Molekulargewicht von größer als 100.000 Da auf, das TPU-2 vorzugsweise ein Molekulargewicht im Bereich von 50.000 bis 150.000 Da. Die Obergrenze für das zahlenmittlere Molekulargewicht der thermoplastischen Polyurethane wird in aller Regel durch die Verarbeitbarkeit wie auch das gewünschte Eigenschaftsspektrum bestimmt.

Beispielsweise kann das thermoplastische Polyurethan TPU-1 ein Molekulargewicht im Bereich von 100.000 Da bis 400.000 Da aufweisen.

In einer Ausführungsform werden zur Herstellung der erfindungsgemäßen Zusammensetzungen thermoplastisches Polyurethan und Flammschutzmittel in einem Arbeitsschritt verarbeitet. In anderen bevorzugten Ausführungsformen wird zur Herstellung der erfindungsgemäßen Zusammensetzungen zunächst mit einem Reaktionsextruder, einer Bandanlage oder sonstigen geeigneten Vorrichtungen ein thermoplastisches Polyurethan hergestellt, bevorzugt als Granulat, in das dann in mindestens einem weiteren Arbeitsschritt, oder auch mehreren Arbeitsschritten, gegebenenfalls ein weiteres TPU und ein weiteres Flammschutzmittel eingebracht wird.

Das Vermischen des thermoplastischen Polyurethans mit dem Polymer und dem mindestens einen Flammschutzmittel, insbesondere mit dem mindestens einen Metallhydroxid, dem mindestens einen phosphorhaltigen Flammschutzmittel, erfolgt in einer Mischeinrichtung, die bevorzugt ein Innen-Kneter oder ein Extruder, bevorzugt ein Zweiwellenextruder, ist. Das Metallhydroxid ist bevorzugt ein Aluminiumhydroxid. In einer bevorzugten Ausführungsform ist zumindest ein in die Mischeinrichtung in dem mindestens einem weiteren Arbeitsschritt eingebrachte Flammschutzmittel flüssig, d.h. flüssig bei einer Temperatur von 21 °C. In einer anderen bevorzugten Ausführungsform der Verwendung eines Extruder ist das eingebrachte Flammschutzmittel bei einer Temperatur flüssig, die in Fließrichtung des Füllgutes in dem Extruders hinter dem Einfüllpunkt herrscht.

### Metallhydroxid

Die erfindungsgemäße Zusammensetzung enthält mindestens ein Metallhydroxid. Im Brandfall setzten Metallhydroxide ausschließlich Wasser frei und bilden daher keine toxischen oder korrosiven Rauchgasprodukte. Darüber hinaus sind diese Hydroxide in der Lage, die Rauchgasdichte im Brandfall zu reduzieren. Nachteil dieser Substanzen ist jedoch, dass sie gegebenenfalls die Hydrolyse von thermoplastischen Polyurethanen fördern und auch die oxidative Alterung der Polyurethane beeinflussen.

Geeignet sind im Rahmen der vorliegenden Erfindung vorzugsweise Hydroxide des Magnesiums, Calciums, Zinks und/oder Aluminiums oder Mischungen dieser. Besonders bevorzugt ist das Metallhydroxid ausgewählt aus der Gruppe bestehend aus Aluminiumhydroxiden, Aluminiumoxidhydroxiden, Magnesiumhydroxid und einer Mischung aus zwei oder mehr dieser Hydroxide.

Demgemäß betrifft die vorliegende Erfindung gemäß einer weiteren Ausführungsform auch eine Zusammensetzung wie zuvor beschrieben, wobei das Metallhydroxid ausgewählt ist aus der Gruppe bestehend aus Aluminiumhydroxiden, Aluminiumoxidhydroxiden, Magnesiumhydroxid und einer Mischung aus zwei oder mehr dieser Hydroxide.

Eine bevorzugte Mischung ist Aluminiumhydroxid und Magnesiumhydroxid. Besonders bevorzugt ist Magnesiumhydroxid oder Aluminiumhydroxid. Ganz besonders bevorzugt ist Aluminiumhydroxid.

Demgemäß betrifft die vorliegende Erfindung gemäß einer weiteren Ausführungsform auch eine Zusammensetzung wie zuvor beschrieben, wobei das Metallhydroxid Aluminiumhydroxid ist.

Der Anteil des mindestens einen Metallhydroxids in den erfindungsgemäßen Zusammensetzungen liegt vorzugsweise im Bereich von 25 Gew.-% bis 65 Gew.-%. Bei höheren Füllgraden verschlechtern sich die mechanischen Eigenschaften der entsprechenden Polymerwerkstoffe in einer nicht akzeptablen Weise. So gehen insbesondere die für die Kabelisolierung wichtige Zugfestigkeit und Reißdehnung auf ein nicht akzeptables Maß zurück. Bevorzugt ist der Anteil des Metallhydroxids in der erfindungsgemäßen Zusammensetzung im Bereich von 40 Gew.-% bis 62 Gew.-%, weiter bevorzugt im Bereich von 50 Gew.-% bis 60 Gew.-%, besonders bevorzugt im Bereich von 55 Gew.-% bis 58 Gew.-%, jeweils bezogen auf die gesamte Zusammensetzung.

Gemäß einer weiteren Ausführungsform betrifft die vorliegende Erfindung daher eine Zusammensetzung wie zuvor beschrieben, wobei der Anteil des Metallhydroxids in der Zusammensetzung im Bereich von 25 bis 65 % bezogen auf die gesamte Zusammensetzung, liegt.

Die erfindungsgemäß eingesetzten Metallhydroxide haben üblicherweise eine spezifische Oberfläche von 2 m²/g bis 150 m²/g, bevorzugt liegt die spezifische Oberfläche jedoch zwischen 2 m²/g und 9 m²/g, weiter bevorzugt zwischen 3 m²/g und 8 m²/g, besonders bevorzugt zwischen 3 m²/g und 5 m²/g. Die spezifische Oberfläche wird mit dem BET Verfahren nach DIN ISO 9277:2003-05 mit Stickstoff bestimmt.

### Beschichtete Metallhydroxide

Erfindungsgemäß kann die Oberfläche der Metallhydroxide zumindest teilweise von einer Hülle umgeben sein, auch als zumindest teilweise Umhüllung bezeichnet. Die Hülle ist gleichzusetzen mit dem häufig verwendeten Begriff *Coating* oder Oberflächenbehandlung. Die Hülle haftet entweder durch Formschluss oder van-der Waals-Kräften rein physikalisch auf dem Metallhydroxid, oder sie ist chemisch mit dem Metallhydroxid verbunden. Dies geschieht überwiegend durch kovalente Wechselwirkung.

Die Oberflächenbehandlung oder auch Oberflächenmodifikation, die zu einer Hülle um das eingeschlossene Teil, in vorliegendem Fall das Metallhydroxid, insbesondere das Aluminiumhydroxid führt, wird ausführlich in der Literatur beschrieben. Ein Basiswerk in dem geeignete Materialien als auch die Beschichtungstechnik beschrieben wird, ist "Particulate-Filled Polymer Composites (2nd Edition), edited by: Rothon, Roger N., 2003, Smithers Rapra Technology. Besonders relevant ist das Kapitel 4. Entsprechende Materialien sind kommerziell erhältlich, z.B. bei der Firma Nabaltec, Schwandorf oder Martinswerke in Bergheim, beide in Deutschland.

Bevorzugte Beschichtungsmaterialien sind gesättigte oder ungesättigte Polymere mit Säurefunktion, bevorzugt mit mindestens einer Acrylsäure oder einem Säureanhydrid, bevorzugt Maleinsäureanhydrid, da sich diese besonders gut an die Oberfläche des Metallhydroxides anlagern.

Bei dem Polymer handelt es sich um ein Polymer oder Mischungen von Polymeren, bevorzugt ist ein Polymer. Bevorzugte Polymere sind Polymere von Mono- und Diolefinen, Mischungen hiervon, Copolymere von Mono- und Diolefinen untereinander oder mit anderen Vinylmonomeren, Polystyrol, Poly(p-methylstyrol), Poly-(alpha-methylstyrol), Copolymere von Styrol oder alpha-Methylstyrol mit Dienen oder Acrylderivaten, Propfcopolymere von Styrol oder alpha-Methylstyrol, halogenhaltige Polymere, Polymere, die sich von alpha-, beta-ungesättigten Säuren und deren Derivaten ableiten, und Copolymere dieser Monomere untereinander oder mit anderen ungesättigten Monomeren.

Ebenfalls bevorzugte Beschichtungsmaterialien sind monomere organische Säuren und ihre Salze, bevorzugt gesättigte Fettsäuren, weniger gebräuchlich sind ungesättigte Säuren. Bevorzugte Fettsäuren umfassen 10 bis 30 Kohlenstoffatome, bevorzugt 12 bis 22, insbesondere 16 bis 20 Kohlenstoffatom, sie sind aliphatisch und haben bevorzugt keine Doppelbindungen. Ganz besonders bevorzugt ist die Stearinsäure. Bevorzugte Fettsäurederivate sind ihre Salze, bevorzugt Calcium, Aluminium, Magnesium oder Zink. Besonders bevorzugt ist Calcium, insbesondere als Calciumstearat.

Andere bevorzugte Stoffe die eine Hülle um das Metallhydroxid, bevorzugt das Aluminiumhydroxid bilden sind Organosilanverbindungen mit folgendem Aufbau:

(R)₄₋ₙ --- Si --- Xₙ mit n = 1, 2 oder 3.

X ist eine hydrolysierbare Gruppe, die mit der Oberfläche des Metallhydroxides reagiert, auch als Kupplungsgruppe bezeichnet. Bevorzugt ist der Rest R ein Kohlenwasserstoffrest und ist so ausgewählt, dass die Orgnosilanverbindung gut mit dem thermoplastischen Polyurethan mischbar ist. Der Rest R ist über eine hydrolytisch stabile Kohlenstoff-Silizium Verbindung mit dem Silicium verbunden und kann reaktiv sein oder inert. Ein Beispiel für einen reaktiven Rest, der bevorzugt ein ungesättigter Kohlenwasserstoffrest ist, ist ein Allylrest. Bevorzugt ist der Rest R inert, weiter bevorzugt ein gesättigter Kohlenstoffwasserstoffrest mit 2 bis 30 Kohlenstoffatomen, bevorzugt 6 bis 20 Kohlenstoffatomen und besonders bevorzugt 8 bis 18 Kohlenstoffatomen, weiter bevorzugt handelt es sich um einen aliphatischen Kohlenwasserstoffrest, der verzweigtkettig oder linear ist.

Weiter bevorzugt enthält die Organosilanverbindung nur einen Rest R und hat die allgemeine Formel:

R --- Si --- (X)₃

Bevorzugt ist die Kupplungsgruppe X ein Halogen, bevorzugt Chlor und demzufolge das Kupplungreaganz ein Tri-, Di- oder Monochlorsilan. Ebenfalls bevorzugt ist die Kupplungsgruppe X eine Alkoxy-Gruppe, bevorzugt eine Methoxy- oder eine Ethoxy-Gruppe. Ganz bevorzugt ist der Rest das Hexadecyl-Radikal, bevorzugt mit der Methoxy- oder Ethoxy-Kupplungsgruppe, somit ist das Organosilan das Hexadecylsilan.

Die Silane werden mit 0,1 Gew.-% bis 5 Gew.-%, weiter bevorzugt 0,5 Gew.-% bis 1,5 Gew.-% und besonders bevorzugt mit ca. 1 Gew. % bezogen auf die Gesamtmenge des Metallhydroxides auf dieses aufgebracht. Carbonsäuren und -derivate werden mit 0,1 Gew.-% bis 5 Gew.-%, weitere bevorzugt mit 1,5 Gew. % bis 5 Gew. % und besonders bevorzugt mit 3 Gew.-% bis 5 Gew.-% bezogen auf die Gesamtmenge des Metallhydroxid auf dieses aufgebracht.

Von den teilweise mit einer Hülle umgebenen Metallhydroxiden haben bevorzugt mehr als 50 %, weiter bevorzugt mehr als 70 %, weiter bevorzugt mehr als 90 % eine maximale Ausdehnung von weniger als 10 µm, bevorzugt weniger als 5 µm, besonders bevorzugt weniger als 3 µm. Gleichzeitig haben mindestens 50 % der Teilchen, bevorzugt mindestens 70 %, weiter bevorzugt mindestens 90 % zumindest eine maximale Ausdehnung von mehr als 0,1 µm, weiter bevorzugt von mehr als 0,5 µm und besonders bevorzugt mehr als 1 µm.

Bevorzugt werden bei der Herstellung der erfindungsgemäßen thermoplastischen Polyurethane Metallhydroxide verwendet, die bereits beschichtet sind. Nur so können ungewünschte Nebenreaktionen der Beschichtungsmaterialien mit den Bestandteilen des thermoplastischen Polyurethans vermieden werden und der Vorteil der Verhinderung des oxidativen Abbaus des thermoplastischen Polyurethans kommt besonders gut zum Tragen. Weiter bevorzugt kann die Beschichtung des Metallhydroxides auch im Einfüllbereich des Extruders erfolgen, bevor in einem flussabwärts gelegenen Teil des Extruders das Polyurethan zugegeben wird.

Gemäß einer weiteren Ausführungsform betrifft die vorliegende Erfindung demgemäß auch eine Zusammensetzung wie zuvor beschrieben, wobei das Metallhydroxid zumindest teilweise von einer Hülle umgeben ist.

### Phosphorhaltige Flammschutzmittel

Die erfindungsgemäßen Zusammensetzungen enthalten mindestens ein phosphorhaltiges Flammschutzmittel. Erfindungsgemäß können prinzipiell alle bekannten phosphorhaltigen Flammschutzmittel für thermoplastische Polyurethane eingesetzt werden.

Bevorzugt werden im Rahmen der vorliegenden Erfindung Derivate der Phosphorsäure, Derivate der Phosphonsäure oder Derivate der Phosphinsäure oder Mischungen aus zwei oder mehreren dieser Derivate eingesetzt.

Demgemäß betrifft die vorliegende Erfindung gemäß einer weiteren Ausführungsform auch eine Zusammensetzung wie zuvor beschrieben, wobei das phosphorhaltige Flammschutzmittel ausgewählt ist aus der Gruppe bestehend aus Derivaten der Phosphorsäure, Derivaten der Phosphonsäure, Derivaten der Phosphinsäure und einer Mischung aus zwei oder mehr dieser Derivate.

Gemäß einer weiteren bevorzugten Ausführungsform ist das phosphorhaltige Flammschutzmittel bei 21 °C flüssig.

Bevorzugt handelt es sich bei den Derivaten der Phosphorsäure, Phosphonsäure oder Phosphinsäure um Salze mit organischem oder anorganischem Kation oder um organische Ester. Organische Ester sind Derivate der Phosphor-haltigen Säuren, bei denen zumindest ein direkt an den Phosphor gebundenes Sauerstoffatom mit einem organischen Rest verestert ist. In einer bevorzugten Ausführungsform handelt es sich bei dem organischen Ester um einen Alkylester, in einer anderen bevorzugten Ausführungsform um einen Arylester. Besonders bevorzugt sind alle Hydroxygruppen der entsprechenden Phosphor-haltigen Säure verestert.

Organische Phosphatester sind bevorzugt, besonders die Triester, der Phosphorsäure, wie Trialkylphosphate und insbesondere Triarylphosphate, wie zum Beispiel Triphenylphosphat. Bevorzugt werden erfindungsgemäß als Flammschutzmittel für die thermoplastischen Polyurethane Phosphorsäureester der allgemeinen Formel (I) 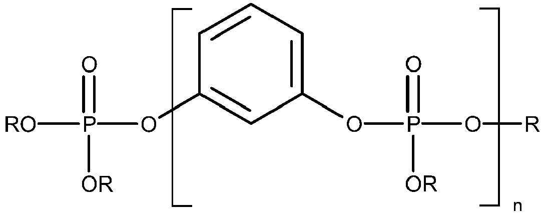 verwendet, wobei R für, gegebenenfalls substituierte, Alkyl-, Cycloalkyl- oder Phenylgruppen steht und n = 1 bis 15 bedeutet.

Steht R in der allgemeinen Formel (I) für einen Alkylrest, kommen insbesondere solche Alkylreste mit 1 bis 8 C-Atomen in Betracht. Als Beispiel für die Cycloalkylgruppen sei der Cyclohexyl-Rest genannt. Bevorzugt werden solche Phosphorsäureester der allgemeinen Formel (I) eingesetzt, bei denen R = Phenyl oder alkylsubstituiertes Phenyl bedeutet. n ist in der allgemeinen Formel (I) insbesondere 1 oder liegt vorzugsweise im Bereich von etwa 3 bis 6. Als Beispiele für die bevorzugten Phosphorsäureester der allgemeinen Formel (I) seien das 1,3-Phenylen-bis-(diphenyl)phosphat, das 1,3-Phenylen-bis-(dixylenyl)phosphat sowie die entsprechenden oligomeren Produkte mit einem mittleren Oligomerisierungsgrad von n = 3 bis 6 genannt. Ein bevorzugtes Resorcinol ist Resorcinol bis-diphenylphosphat (RDP), das üblicherweise in Oligomeren vorliegt.

Weitere bevorzugte phosphorhaltige Flammschutzmittel sind Bisphenol-A bis-(diphenylphosphat) (BDP), das üblicherweise als Oligomer vorliegt, und Diphenylkresylphosphat (DPK).

Demgemäß betrifft die vorliegende Erfindung gemäß einer weiteren Ausführungsform auch eine Zusammensetzung wie zuvor beschrieben, wobei das phosphorhaltige Flammschutzmittel ausgewählt ist aus der Gruppe bestehend aus Resorcinol bis-diphenylphosphat (RDP), Bisphenol-A bis-(diphenylphosphat) (BDP), und Diphenylkresylphosphat (DPK).

Demgemäß betrifft die vorliegende Erfindung gemäß einer weiteren Ausführungsform auch eine Zusammensetzung wie zuvor beschrieben, wobei das phosphorhaltige Flammschutzmittel Resorcinol bis-diphenylphosphat (RDP) ist.

Bei den organischen Phosphonaten handelt es sich um Salze mit organischem oder anorganischen Kation oder um die Ester der Phosphonsäure. Bevorzugte Ester der Phosphonsäure sind die Diester von Alkyl- oder Phenylphosphonsäuren. Beispielhaft für die erfindunggemäß als Flammschutzmittel einzusetzenden Phosphonsäureester seien die Phosphonate der allgemeinen Formel (II) 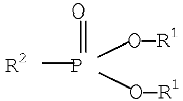 angeführt, wobei
- R¹: für gegebenenfalls substituierte, Alkyl-, Cycloalkyl- oder Phenylgruppen steht, wobei die beiden Reste R¹ auch cyclisch miteinander verknüpft sein können und
- R²:: für einen, gegebenenfalls substituierten, Alkyl-, Cycloalkyl- oder Phenylrest steht.

Besonders geeignet sind dabei cyclische Phosphonate wie z.B. 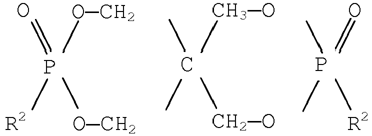 mit R² = CH₃ und C₆H₅, die sich vom Pentaerythrit ableiten, oder 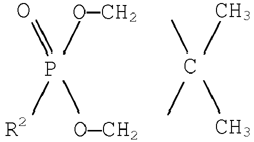 mit R² = CH₃ und C₆H₅, die sich vom Neopentylglykol ableiten, oder 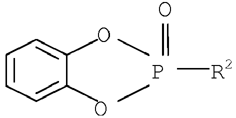 mit R² = CH₃ und C₆H₅, die sich vom Brenzkatechin ableiten, aber auch 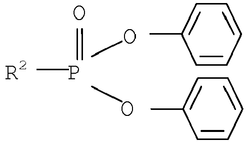 mit R² = einem unsubstituierten oder auch substituierten Phenylrest.

Phosphinsäureester haben die allgemeine Formel R¹R²(P=O)OR³, wobei alle drei organischen Gruppen R¹, R² und R³ gleich oder verschieden sein können. Die Reste R¹, R² und R³ sind entweder aliphatisch oder aromatisch und haben 1 bis 20 Kohlenstoffatome, bevorzugt 1 bis 10, weiter bevorzugt 1 bis 3. Bevorzugt ist zumindest einer der Reste aliphatisch, bevorzugt sind alle Reste aliphatisch, ganz besonders bevorzugt sind R¹ und R² Ethylreste. Weiter bevorzugt ist auch R³ ein Ethylrest oder ein Methylrest. In einer bevorzugten Ausführungsform sind R¹, R² und R³ gleichzeitig Ethylrest oder Methylreste.

Bevorzugt sind auch Phosphinate, d.h. die Salze der Phosphinsäure. Die Reste R¹ und R² sind entweder aliphatisch oder aromatisch und haben 1 bis 20 Kohlenstoffatome, bevorzugt 1 bis 10, weiter bevorzugt 1 bis 3. Bevorzugt ist zumindest einer der Reste aliphatisch, bevorzugt sind alle Reste aliphatisch, ganz besonders bevorzugt sind R¹ und R² Ethylreste. Bevorzugte Salze der Phosphinsäuren sind Aluminium-, Calcium- oder Zinksalze. Eine bevorzugte Ausführungsform ist Diethylaluminiumphosphinat.

Die phosphorhaltigen Flammschutzmittel, ihre Salze und/oder ihre Derivate werden in den erfindungsgemäßen Zusammensetzungen als Einzelsubstanz oder in Mischungen verwendet.

Im Rahmen der vorliegenden Erfindung wird das mindestens eine phosphorhaltige Flammschutzmittel in einer geeigneten Menge eingesetzt Bevorzugt ist das mindestens eine phosphorhaltige Flammschutzmittel in einer Menge im Bereich von 2 Gew.-% bis 20 Gew.-% enthalten, weiter bevorzugt im Bereich von 2,5 Gew.-% bis 10 Gew.-% und besonders bevorzugt im Bereich von 3 Gew.-% bis 5 Gew.-%, jeweils bezogen auf die gesamte Zusammensetzung.

Gemäß einer weiteren Ausführungsform betrifft die vorliegende Erfindung daher eine Zusammensetzung wie zuvor beschrieben, wobei der Anteil des phosphorhaltigen Flammschutzmittels im Bereich von 2 bis 20 % bezogen auf die gesamte Zusammensetzung, liegt.

Gemäß einer bevorzugten Ausführungsform enthält die erfindungsgemäße Zusammensetzung als phosphorhaltiges Flammschutzmittel Resorcinol bis-diphenylphosphat (RDP). Gemäß einer weiteren bevorzugten Ausführungsform enthält die erfindungsgemäße Zusammensetzung als phosphorhaltiges Flammschutzmittel Resorcinol bis-diphenylphosphat (RDP) und Aluminiumhydroxid.

Durch die Kombination der verschiedenen Flammschutzmittel sowie des eingesetzten thermoplastischen Polyurethans TPU-1, das auf einem aliphatischen Diisocyanat basiert, und gegebenenfalls des thermoplastischen Polyurethans TPU-2, das auf einem aromatischen Diisocyanat basiert, werden mechanische Eigenschaften und Flammschutzeigenschaften auf die jeweilige Anforderung optimiert.

Gemäß der vorliegenden Erfindung werden das phosphorhaltige Flammschutzmittel, insbesondere die Phosphorsäureester, Phosphonsäureester und/oder Phospinsäureester und/oder deren Salze in Mischung zusammen mit mindestens einem Metallhydroxid als Flammschutzmittel eingesetzt. Dabei ist das Gewichtsverhältnis der Summe des Gewichts der eingesetzten Phosphatester, Phosphonatester und Phosphinatester zu dem Gewicht des eingesetzten Metallhydroxid in der erfindungsgemäßen Zusammensetzung vorzugsweise im Bereich von 1:8 bis 1:12.

Die vorliegende Erfindung betrifft auch die Verwendung der erfindungsgemäßen Zusammensetzung enthaltend mindestens ein flammgeschütztes thermoplastisches Polyurethan wie zuvor beschrieben, zur Herstellung von Beschichtungen, Dämpfungselementen, Faltenbälgen, Folien oder Fasern, Formkörpern, Fußböden für Gebäude und Transport, "non woven" Gewebe, bevorzugt Dichtungen, Rollen, Schuhsohlen, Schläuchen, Kabel, Kabelstecker, Kabelummantelungen, Kissen, Laminaten, Profilen, Riemen, Sätteln, Schäumen, Steckverbindungen, Schleppkabel, Solarmodulen, Verkleidungen in Automobilen. Bevorzugt ist die Verwendung zur Herstellung von Kabelummantelungen. Die Herstellung erfolgt bevorzugt aus Granulaten, durch Spritzguss, Kalandrieren, Pulversintern, oder Extrusion und/oder durch zusätzliches Schäumen der erfindungsgemäßen Zusammensetzung.

Demgemäß betrifft die vorliegende Erfindung auch die Verwendung einer Zusammensetzung enthaltend mindestens ein thermoplastisches Polyurethan TPU-1, das auf einem aliphatischen Diisocyanat basiert, mindestens ein Metallhydroxid und mindestens ein phosphorhaltiges Flammschutzmittelwie zuvor beschrieben zur Herstellung von Kabelummantelungen. Weiter verbesserte Eigenschaften für die Anwendung in Kabelummantelungen werden erhalten für Zusammensetzungen enthaltend mindestens ein thermoplastisches Polyurethan TPU-1, das auf einem aliphatischen Diisocyanat basiert, mindestens ein Metallhydroxid und mindestens ein phosphorhaltiges Flammschutzmittel, wobei die Zusammensetzung weiter mindestens ein thermoplastisches Polyurethan TPU-2, das auf einem aromatischen Diisocyanat basiert.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.
1. Zusammensetzung enthaltend mindestens ein thermoplastisches Polyurethan TPU-1, das auf einem aliphatischen Diisocyanat basiert, mindestens ein Metallhydroxid und mindestens ein phosphorhaltiges Flammschutzmittel, wobei die Zusammensetzung weiter mindestens ein thermoplastisches Polyurethan TPU-2, das auf einem aromatischen Diisocyanat basiert, enthält.
2. Zusammensetzung gemäß Ausführungsform 1, wobei der Anteil des thermoplastischen Polyurethans TPU-2 in der Zusammensetzung im Bereich von 0,1 bis 65 % bezogen auf die gesamte Zusammensetzung, liegt.
3. Zusammensetzung gemäß einer der Ausführungsformen 1 oder 2, wobei das thermoplastische Polyurethan TPU-1 eine Shore Härte im Bereich von 85A bis 65D, bestimmt gemäße DIN ISO 7619-1, aufweist.
4. Zusammensetzung gemäß einer der Ausführungsformen 1 bis 3, wobei das thermoplastische Polyurethan TPU-1 auf mindestens einem aliphatischen Diisocyanat ausgewählt aus der Gruppe bestehend aus Hexamethylendiisocyanat und Di(isocyanatocyclohexyl)methan basiert.
5. Zusammensetzung gemäß einer der Ausführungsformen 1 bis 4, wobei das thermoplastische Polyurethan TPU-2 auf Diphenylmethandiisocyanat (MDI) basiert.
6. Zusammensetzung gemäß einer der Ausführungsformen 1 bis 5, wobei das thermoplastische Polyurethan TPU-2 eine Shore Härte im Bereich von 80A bis 95A, bestimmt gemäße DIN ISO 7619-1, aufweist.
7. Zusammensetzung gemäß einer der Ausführungsformen 1 bis 6, wobei das Metallhydroxid ausgewählt ist aus der Gruppe bestehend aus Aluminiumhydroxiden, Aluminiumoxidhydroxiden, Magnesiumhydroxid und einer Mischung aus zwei oder mehr dieser Hydroxide.
8. Zusammensetzung gemäß einer der Ausführungsformen 1 bis 7, wobei das Metallhydroxid Aluminiumhydroxid ist.
9. Zusammensetzung gemäß einer der Ausführungsformen 1 bis 8, wobei das Metallhydroxid zumindest teilweise von einer Hülle umgeben ist.
10. Zusammensetzung gemäß einer der Ausführungsformen 1 bis 9, wobei das phosphorhaltige Flammschutzmittel ausgewählt ist aus der Gruppe bestehend aus Derivaten der Phosphorsäure, Derivaten der Phosphonsäure, Derivaten der Phosphinsäure und einer Mischung aus zwei oder mehr dieser Derivate.
11. Zusammensetzung gemäß einer der Ausführungsformen 1 bis 10, wobei das phosphorhaltige Flammschutzmittel ausgewählt ist aus der Gruppe bestehend aus Resorcinol bis-diphenylphosphat (RDP), Bisphenol-A bis-(diphenylphosphat) (BDP), und Diphenylkresylphosphat (DPK).
12. Zusammensetzung gemäß einer der Ausführungsformen 1 bis 13, wobei der Anteil des thermoplastischen Polyurethans TPU-1 in der Zusammensetzung im Bereich von 5 bis 35 % bezogen auf die gesamte Zusammensetzung, liegt.
13. Zusammensetzung gemäß einer der Ausführungsformen 1 bis 12, wobei der Anteil des thermoplastischen Polyurethans TPU-2 in der Zusammensetzung im Bereich von 15 bis 65 % bezogen auf die gesamte Zusammensetzung, liegt.
14. Zusammensetzung gemäß einer der Ausführungsformen 1 bis 13, wobei der Anteil des Metallhydroxids in der Zusammensetzung im Bereich von 25 bis 65 % bezogen auf die gesamte Zusammensetzung, liegt.
15. Zusammensetzung gemäß einer der Ausführungsformen 1 bis 14, wobei der Anteil des phosphorhaltigen Flammschutzmittels im Bereich von 2 bis 20 % bezogen auf die gesamte Zusammensetzung, liegt.
16. Verwendung einer Zusammensetzung gemäß einer der Ausführungsformen 1 bis 15 zur Herstellung von Kabelummantelungen.

Die nachfolgenden Beispiele dienen der Veranschaulichung der Erfindung, sind aber in keiner Weise einschränkend hinsichtlich des Gegenstands der vorliegenden Erfindung.

### BEISPIELE

Die Beispiele zeigen die verbesserte Flammfestigkeit der erfindungsgemäßen Zusammensetzungen, die guten mechanischen Eigenschaften und die geringere Rauchgasdichte.

### 1. Einsatzstoffe

Elastollan 1185A10: TPU der Shore Härte 85A der BASF Polyurethanes GmbH, Elastogranstrasse 60, 49448 Lemförde, basiert auf Polytetrahydrofuranpolyol (PTHF) mit einem Molekulargewicht von 1000, 1,4-Butandiol, MDI.

Elastollan L 1160D10: TPU der Shore Härte 60D der BASF Polyurethanes GmbH, Elastogranstrasse 60, 49448 Lemförde, basiert auf Polytetrahydrofuranpolyol (PTHF) mit einem Molekulargewicht von 1000, 1,4-Butandiol, H₁₂MDI.

Elastollan A: TPU der Shore Härte 87A, Versuchsmaterial, basiert auf einem Polycarbonatdiol der Firma Ube (Eternacoll PH-200D), 1,4-Butandiol, MDI.

Apyral 40 HS1: Aluminiumhydroxid mit einem hydrophoben Oberflächencoating basierend auf ca. 1% Hexadecylsilan, Nabaltec AG, Alustrasse 50 - 52, D-92421 Schwandorf, Al(OH)₃-Gehalt [%] ≈ 99.5, Teilchengröße (Laserbeugung) [µm] D50: 1,4, Spezifische Oberfläche /Specific Surface Area (BET) [m²/g]: 3,5.

Cloisite 5: organisch modifiziertes nano-dispergierbares Schichtsilikat auf Basis natürlicher Bentonite, Rockwood Clay Additives GmbH, Stadtwaldstraße 44, D-85368 Moosburg, Pulver, mittlere Korngröße D50, d.h. mindestens 50 % der Teilchen sind kleiner als 40µm.

ETERNACOLL® PH 200D: Copolycarbonatdiol basierend auf den Diolen 1,5-Pentandiol und 1,6-Hexanediol mit einem Molekulargewicht Mₙ von ca. 2000

Fyrolflex RDP: Resorcinol bis (diphenyl phosphat), CAS #: 125997-21-9, Supresta Netherlands B.V., Office Park De Hoef, Hoefseweg 1, 3821 AE Amersfoort, The Netherlands.

Crodamide ER BEAD: Erucamide, CAS#: 112-84-5, Croda Europe Limited, Cowick Hall, Snaith, Goole, East Riding of Yorkshire, DN14 9AA, GB

### 2. Herstellung von Elastollan A im Handgussverfahren

Die in der zugrundeliegenden Rezeptur (Tabelle 1) festgelegte Menge Polyol und der Kettenverlängerer wird in der Weißblechdose eingewogen und kurz mit Stickstoff beschleiert. Die Dose wir mit einem Deckel verschlossen und im Heizschrank auf ca. 90 °C aufgeheizt.

Ein weiterer Heizschrank zum Tempern der Schwarte wird auf 80 °C vorgeheizt. Die Teflonschale wird auf den Heiztisch gestellt und dieser auf 125 °C eingestellt.

Die berechnete Menge an flüssigen Isocyanat wird durch Auslitern bestimmt. Dazu wird das flüssige Isocyanat (MDI wird mit einer Temperatur von ca. 48 °C ausgelitert) in einem PE-Becher eingewogen und innerhalb von 10s in einen PE-Becher ausgegossen. Anschließend wird der so entleerte Becher tariert und mit der berechneten Menge an Isocyanat befüllt. Im Fall von MDI wird dieser bei ca. 48 °C im Heizschrank gelagert.

Zusätze wie Hydrolyseschutz, Antioxidans, etc. die bei RT als Feststoffe vorliegen, werden direkt eingewogen.

Das vorgeheizte Polyol wird auf einer Hebebühne unter den ruhenden Rührer gestellt. Anschließend wird das Reaktionsgefäß mit der Hebebühne soweit angehoben, bis die Rührblätter vollständig in das Polyol eintauchen.

Bevor der Rührmotor eingeschaltet wird, unbedingt darauf achten, dass sich der Drehzahlregler in der Nullstellung befindet. Anschließend wird die Drehzahl langsam hochgeregelt, so dass eine gute Durchmischung ohne Einrühren von Luft gewährleistet wird.

Anschließend werden Additive wie z.B. Antioxidantien in das Polyol gegeben.

Die Temperatur der Reaktionsmischung wird vorsichtig mit einem Heißluftfön auf 80 °C eingestellt.

Falls erforderlich wird vor der Isocyanatzugabe Katalysator mit der Microliterspritze zur Reaktionsmischung dosiert. Bei 80 °C erfolgt nun die Zugabe von Isocyanat, indem die zuvor ausgeliterte Menge innerhalb von 10s in die Reaktionsmischung eingetragen wird. Durch Rückwaage erfolgt die Gewichtskontrolle. Abweichungen größer/kleiner 0,2 g von der Rezepturmenge werden dokumentiert. Mit der Zugabe des Isocyanats wird die Stoppuhr gestartet. Bei Erreichen von 110 °C wird die Reaktionsmischung in die Teflonschalen, die auf 125 °C vorgeheizt sind, ausgegossen.

10min nach Start der Stoppuhr wird die Schwarte vom Heiztisch genommen und anschließend für 15h im Heizschrank bei 80 °C gelagert. Die ausgekühlte Schwarte wird in der Schneidmühle zerkleinert. Das Granulat wird nun für 3h bei 110 °C getrocknet und trocken gelagert.

Grundsätzlich kann dieses Verfahren auf den Reaktionsextruder oder das Bandverfahren übertragen werden.

**Tabelle 1: Rezeptur für Elastollan A und B**

| | |
|---|---|
| Polycarbonatdiol | 1000 g |
| Lupranat MET | 460 g |
| Butandiol-1,4 | 115 g |
| Elastostab H01 | 33 g |
| Irganox 1125 | 33 g |

Für die Herstellung von Elastollan A wird als Polycarbonatdiol ein Polycarbonatdiol der Firma Ube (Eternacoll PH-200D) eingesetzt.

### Herstellung der Mischungen

In der nachfolgenden Tabelle 2 werden Zusammensetzungen aufgeführt, in denen die einzelnen Einsatzstoffe in Gewichtsanteilen (GT) angegeben sind. Die Mischungen wurden jeweils mit einem Doppelwellenextruder Typ ZE 40 A der Fa. Berstorff mit einer Verfahrensteillänge von 35 D unterteilt in 10 Gehäuse hergestellt.

### 3. Mechanische Eigenschaften

Die Mischungen wurden mit einem Einwellenextruder Typ Arenz mit einer Dreizonenschnecke mit Mischteil (Schneckenverhältnis1:3) zu Folien mit einer Dicke von 1,6 mm extrudiert. Gemessen wurden MFR, Dichte, Shore Härte, Zugfestigkeit, Weiterreißfestigkeit und Reißdehnung und der entsprechenden Probenkörper.

Die erfindungsgemäße Mischung II weist bei gleichem MFR deutlich höhere Zugfestigkeiten und eine höhere Weiterreißfestigkeit auf.

### 4. Flammwidrigkeit

Um die Flammwidrigkeit zu bewerten, wird ein Probekörper mit einer Dicke von 1,6 mm gemäß UL 94V (UL Standard for Safety for Tests for Flammability of Plastic Materials for Parts in Devices and Appliances) geprüft. Alle Mischungen wurden in der Dicke 1,6 mm als V0 eingestuft. Unterschiede waren aber bei den jeweiligen Nachbrennzeiten erkennbar.

Für die Mischung II wurden geringfügig längere Nachbrennzeiten ermittelt.

Um die Flammwidrigkeit zu bewerten, wurden an einer konventionellen Extrusionslinie (Glattrohrextruder, Extruderdurchmesser 45 mm) für Kabelisolation und Kabelummantelung Kabel hergestellt. Es wurde mit einer konventionellen Dreizonenschnecke mit einem Kompressionsverhältnis von 2,5:1 gearbeitet.

Zunächst wurden die Adern (16 verdrillte Einzeldrähte) mit den jeweiligen Mischungen im Schlauchverfahren mit 0,3 mm der jeweiligen Mischungen isoliert. Der Durchmesser der isolierten Adern betrug 1,8 mm. Drei dieser Adern wurden verseilt und ein Mantel (Manteldicke 1mm, im Zwickel 2 mm) im Druckverfahren aufextrudiert. Der Außendurchmesser des gesamten Kabels betrug 6,3 mm.

An der Kabeln wurde dann ein VW 1 Test (UL Standard 1581, §1080 - VW-1 (vertical specimen) flame test) durchgeführt. Der Test wurde an jeweils 3 Kabeln durchgeführt.

Für die Mischung I und II wurde der Test dreimal bestanden.

### 5. Rauchgasdichte

Um die Rauchgasdichten zu beurteilen, wurden Messungen nach der ASTM E 662 an 1,6 mm dicken Probekörpern durchgeführt. Für die Mischungen I und II wurden vergleichbare Rauchgasdichten ermittelt.

**Tabelle 2**

| **Mischungen** | | | I* | II |
|---|---|---|---|---|
| Elastollan A | | | 30 | 25 |
| L1160D10 | | | | 14,85 |
| Apyral HS1 | | | 55 | 55 |
| Chrodamide ER BEAD | | | 0,15 | 0,15 |
| Elvax 260A | | | 9,85 | |
| Fyrolflex RDP | | | 5 | 5 |

| **Mechanische Eigenschaften** | | | | |
|---|---|---|---|---|
| MFR 180 °C/5 kg | [g/10 min] | | 4 | 4 |
| Dichte | [g/cm3] | DIN EN ISO 1183-1, A | 1,57 | 1,59 |
| Shore Härte A | [A] | DIN 53505 | 91 | 92 |
| Zugfestigkeit | [MPa] | DIN EN ISO 527 | 11 | 19 |
| Reißdehnung | [%] | DIN EN ISO 527 | 460 | 420 |
| Weiterreißfestigkeit | [kN/m] | DIN ISO 34-1, B (b) | 29 | 42 |

| **Flammtests** | | | | |
|---|---|---|---|---|
| VW1 Test durchgeführt/bestanden | | UL Standard 1581, §1080 t | 3/3 | 3/3 |
| Nachbrennzeit 1/Nachbrennzeit 2 | [s] | UL 94V, 1,6 mm | 0/3 | 0/0 |

| **Rauchgasdichte** | | | | |
|---|---|---|---|---|
| Korrigiertes Maximum der spezifischen Rauchgasdichte | | ASTM E 662 | 189 | 183 |

| | | | | |
|---|---|---|---|---|
| * Vergleichsbeispiel | | | | |

Für die Mischungen I und II wurden ähnliche Rauchgasdichten und ähnliche Flammwidrigkeiten bestimmt. Mischung II weist jedoch deutlich höhere Zugfestigkeiten und Weiterreißfestigkeiten auf.

## Patentansprüche

1. Zusammensetzung enthaltend mindestens ein thermoplastisches Polyurethan TPU-1, das auf einem aliphatischen Diisocyanat basiert, mindestens ein Metallhydroxid und mindestens ein phosphorhaltiges Flammschutzmittel,
wobei die Zusammensetzung weiter mindestens ein thermoplastisches Polyurethan TPU-2, das auf einem aromatischen Diisocyanat basiert, enthält.

2. Zusammensetzung gemäß Anspruch 1, wobei der Anteil des thermoplastischen Polyurethans TPU-2 in der Zusammensetzung im Bereich von 0,1 bis 65 % bezogen auf die gesamte Zusammensetzung, liegt.

3. Zusammensetzung gemäß einem der Ansprüche 1 oder 2, wobei das thermoplastische Polyurethan TPU-1 eine Shore Härte im Bereich von 85A bis 65D, bestimmt gemäße DIN ISO 7619-1, aufweist.

4. Zusammensetzung gemäß einem der Ansprüche 1 bis 3, wobei das thermoplastische Polyurethan TPU-1 auf mindestens einem aliphatischen Diisocyanat ausgewählt aus der Gruppe bestehend aus Hexamethylendiisocyanat und Di(isocyanatocyclohexyl)methan basiert.

5. Zusammensetzung gemäß einem der Ansprüche 1 bis 4, wobei das thermoplastische Polyurethan TPU-2 auf Diphenylmethandiisocyanat (MDI) basiert.

6. Zusammensetzung gemäß einem der Ansprüche 1 bis 5, wobei das thermoplastische Polyurethan TPU-2 eine Shore Härte im Bereich von 80A bis 95A, bestimmt gemäße DIN ISO 7619-1, aufweist.

7. Zusammensetzung gemäß einem der Ansprüche 1 bis 6, wobei das Metallhydroxid ausgewählt ist aus der Gruppe bestehend aus Aluminiumhydroxiden, Aluminiumoxidhydroxiden, Magnesiumhydroxid und einer Mischung aus zwei oder mehr dieser Hydroxide.

8. Zusammensetzung gemäß einem der Ansprüche 1 bis 7, wobei das Metallhydroxid Aluminiumhydroxid ist.

9. Zusammensetzung gemäß einem der Ansprüche 1 bis 8, wobei das Metallhydroxid zumindest teilweise von einer Hülle umgeben ist.

10. Zusammensetzung gemäß einem der Ansprüche 1 bis 9, wobei das phosphorhaltige Flammschutzmittel ausgewählt ist aus der Gruppe bestehend aus Derivaten der Phosphorsäure, Derivaten der Phosphonsäure, Derivaten der Phosphinsäure und einer Mischung aus zwei oder mehr dieser Derivate.

11. Zusammensetzung gemäß einem der Ansprüche 1 bis 10, wobei das phosphorhaltige Flammschutzmittel ausgewählt ist aus der Gruppe bestehend aus Resorcinol bis-diphenylphosphat (RDP), Bisphenol-A bis-(diphenylphosphat) (BDP), und Diphenylkresylphosphat (DPK).

12. Zusammensetzung gemäß einem der Ansprüche 1 bis 11, wobei der Anteil des thermoplastischen Polyurethans TPU-1 in der Zusammensetzung im Bereich von 5 bis 35 Gew.-% bezogen auf die gesamte Zusammensetzung, liegt.

13. Zusammensetzung gemäß einem der Ansprüche 2 bis 12, wobei der Anteil des thermoplastischen Polyurethans TPU-2 in der Zusammensetzung im Bereich von 15 bis 65 Gew.-% bezogen auf die gesamte Zusammensetzung, liegt.

14. Zusammensetzung gemäß einem der Ansprüche 1 bis 13, wobei der Anteil des Metallhydroxids in der Zusammensetzung im Bereich von 25 bis 65 Gew.-% bezogen auf die gesamte Zusammensetzung, liegt.

15. Zusammensetzung gemäß einem der Ansprüche 1 bis 14, wobei der Anteil des phosphorhaltigen Flammschutzmittels im Bereich von 2 bis 20 Gew.-% bezogen auf die gesamte Zusammensetzung, liegt.

16. Verwendung einer Zusammensetzung gemäß einem der Ansprüche 1 bis 15 zur Herstellung von Kabelummantelungen.

## Claims

1. A composition comprising at least one thermoplastic polyurethane TPU-1 based on an aliphatic diisocyanate, at least one metal hydroxide and at least one phosphorus-containing flame retardant,
wherein the composition further comprises at least one thermoplastic polyurethane TPU-2 based on an aromatic diisocyanate.

2. The composition according to claim 1, wherein the proportion of the thermoplastic polyurethane TPU-2 in the composition is in the range from 0.1% to 65% based on the overall composition.

3. The composition according to either of claims 1 and 2, wherein the thermoplastic polyurethane TPU-1 has a Shore hardness in the range from 85 A to 65 D, determined in accordance with DIN ISO 7619-1.

4. The composition according to any of claims 1 to 3, wherein the thermoplastic polyurethane TPU-1 is based on at least one aliphatic diisocyanate selected from the group consisting of hexamethylene diisocyanate and di(isocyanatocyclohexyl) methane.

5. The composition according to any of claims 1 to 4, wherein the thermoplastic polyurethane TPU-2 is based on diphenylmethane diisocyanate (MDI).

6. The composition according to any of claims 1 to 5, wherein the thermoplastic polyurethane TPU-2 has a Shore hardness in the range from 80 A to 95 A, determined in accordance with DIN ISO 7619-1.

7. The composition according to any of claims 1 to 6, wherein the metal hydroxide is selected from the group consisting of aluminum hydroxides, aluminum oxide hydroxides, magnesium hydroxide and a mixture of two or more of these hydroxides.

8. The composition according to any of claims 1 to 7, wherein the metal hydroxide is aluminum hydroxide.

9. The composition according to any of claims 1 to 8, wherein the metal hydroxide is at least partly enveloped by a shell.

10. The composition according to any of claims 1 to 9, wherein the phosphorus-containing flame retardant is selected from the group consisting of derivatives of phosphoric acid, derivatives of phosphonic acid, derivatives of phosphinic acid and a mixture of two or more of these derivatives.

11. The composition according to any of claims 1 to 10, wherein the phosphorus-containing flame retardant is selected from the group consisting of resorcinol bis(diphenyl phosphate) (RDP), bisphenol A bis(diphenyl phosphate) (BDP) and diphenyl cresyl phosphate (DPK).

12. The composition according to any of claims 1 to 11, wherein the proportion of the thermoplastic polyurethane TPU-1 in the composition is in the range from 5% to 35% by weight based on the overall composition.

13. The composition according to any of claims 2 to 12, wherein the proportion of the thermoplastic polyurethane TPU-2 in the composition is in the range from 15% to 65% by weight based on the overall composition.

14. The composition according to any of claims 1 to 13, wherein the proportion of the metal hydroxide in the composition is in the range from 25% to 65% by weight based on the overall composition.

15. The composition according to any of claims 1 to 14, wherein the proportion of the phosphorus-containing flame retardant is in the range from 2% to 20% by weight based on the overall composition.

16. The use of a composition according to any of claims 1 to 15 for production of cable sheaths.

## Revendications

1. Composition contenant au moins un polyuréthane thermoplastique TPU-1, qui est à base d'un diisocyanate aliphatique, au moins un hydroxyde métallique et au moins un agent ignifuge contenant du phosphore,
la composition contenant en outre au moins un polyuréthane thermoplastique TPU-2, qui est à base d'un diisocyanate aromatique.

2. Composition selon la revendication 1, dans laquelle la proportion du polyuréthane thermoplastique TPU-2 dans la composition se situe dans la plage allant de 0,1 à 65 %, par rapport à l'ensemble de la composition.

3. Composition selon l'une quelconque des revendications 1 ou 2, dans laquelle le polyuréthane thermoplastique TPU-1 présente une dureté Shore dans la plage allant de 85A à 65D, déterminée selon DIN ISO 7619-1.

4. Composition selon l'une quelconque des revendications 1 à 3, dans laquelle le polyuréthane thermoplastique TPU-1 est à base d'au moins un diisocyanate aliphatique choisi dans le groupe constitué par le diisocyanate d'hexaméthylène et le di(isocyanatocyclohexyl)méthane.

5. Composition selon l'une quelconque des revendications 1 à 4, dans laquelle le polyuréthane thermoplastique TPU-2 est à base de diisocyanate de diphénylméthane (MDI).

6. Composition selon l'une quelconque des revendications 1 à 5, dans laquelle le polyuréthane thermoplastique TPU-2 présente une dureté Shore dans la plage allant de 80A à 95A, déterminée selon DIN ISO 7619-1.

7. Composition selon l'une quelconque des revendications 1 à 6, dans laquelle l'hydroxyde métallique est choisi dans le groupe constitué par les hydroxydes d'aluminium, les oxyhydroxydes d'aluminium, l'hydroxyde de magnésium et un mélange de deux ou davantage de ces hydroxydes.

8. Composition selon l'une quelconque des revendications 1 à 7, dans laquelle l'hydroxyde métallique est l'hydroxyde d'aluminium.

9. Composition selon l'une quelconque des revendications 1 à 8, dans laquelle l'hydroxyde métallique est au moins partiellement entouré par une enveloppe.

10. Composition selon l'une quelconque des revendications 1 à 9, dans laquelle l'agent ignifuge contenant du phosphore est choisi dans le groupe constitué par les dérivés de l'acide phosphorique, les dérivés de l'acide phosphonique, les dérivés de l'acide phosphinique et un mélange de deux ou davantage de ces dérivés.

11. Composition selon l'une quelconque des revendications 1 à 10, dans laquelle l'agent ignifuge contenant du phosphore est choisi dans le groupe constitué par le bis-diphénylphosphate de résorcinol (RDP), le bis-(diphénylphosphate) de bisphénol A (BDP) et le phosphate de diphénylcrésyle (DPK).

12. Composition selon l'une quelconque des revendications 1 à 11, dans laquelle la proportion du polyuréthane thermoplastique TPU-1 dans la composition se situe dans la plage allant de 5 à 35 % en poids, par rapport à l'ensemble de la composition.

13. Composition selon l'une quelconque des revendications 2 à 12, dans laquelle la proportion du polyuréthane thermoplastique TPU-2 dans la composition se situe dans la plage allant de 15 à 65 % en poids, par rapport à l'ensemble de la composition.

14. Composition selon l'une quelconque des revendications 1 à 13, dans laquelle la proportion de l'hydroxyde métallique dans la composition se situe dans la plage allant de 25 à 65 % en poids, par rapport à l'ensemble de la composition.

15. Composition selon l'une quelconque des revendications 1 à 14, dans laquelle la proportion de l'agent ignifuge contenant du phosphore se situe dans la plage allant de 2 à 20 % en poids, par rapport à l'ensemble de la composition.

16. Utilisation d'une composition selon l'une quelconque des revendications 1 à 15 pour la fabrication de gainages de câbles.
